# FASCICULE DE BREVET EUROPEEN

(11) **EP 1 336 707 B1**
(45) Date de publication et mention de la délivrance du brevet: **07.06.2006**
(21) Numéro de dépôt: 03100283.5
(22) Date de dépôt: 11.02.2003
(51) Int. Cl.: E05B 63/14, B64D 29/06

(54) **Système de fermeture interposé entre deux éléments**
Verschlussystem zu Montage zwischen zwei Elementen
Closing system mounted between two elements

(30) Priorité: 14.02.2002 FR 0201844
(43) Date de publication de la demande: 20.08.2003
(73) Titulaire: AIRBUS France, 31060 Toulouse (FR)
(72) Inventeur: PORTE, Alain, 31770, COLOMIERS (FR); MARTIN-OQUINA, José Manuel, 31300, TOULOUSE (FR); FOUREST, Philippe, 31530, MERENVIELLE (FR)
(74) Mandataire: Poulin, Gérard

(56) Documents cités:
- US-A- 5 138 753
- US-A- 5 257 840
- US-B1- 6 334 588

## Description

### DOMAINE TECHNIQUE

L'invention se rapporte à un système de fermeture pouvant être interposé entre deux capots de nacelle d'un moteur d'avion aptes à occuper, l'un par rapport à l'autre, une position ouverte et une position fermée.

### ETAT DE LA TECHNIQUE ANTERIEURE

Les nacelles des moteurs d'avion sont habituellement équipées de capots, dont l'ouverture permet d'accéder, lorsque l'avion est au sol, à différents équipements, systèmes, etc., pour en assurer la maintenance. Lorsque l'avion est en vol, les capots sont fermés et présentent une forme telle qu'ils assurent la continuité aérodynamique du moteur dans son ensemble.

De façon plus précise, la nacelle d'un turboréacteur à double flux est généralement équipée d'au moins une paire de capots, respectivement de droite et de gauche, placés autour de la soufflante du moteur. Chacun des capots présente en section approximativement la forme d'un C selon un plan transversal perpendiculaire à l'axe longitudinal du moteur. Une charnière permet d'articuler le bord supérieur de chacun des capots sur la partie haute du moteur. Grâce à cet agencement, il est possible d'accéder aux différents équipements du moteur, notamment pour en effectuer la maintenance, en relevant les capots.

Par ailleurs, les bords inférieurs des capots sont équipés d'un système de fermeture comportant des mécanismes de verrouillage, prévus pour verrouiller les capots dans leur position fermée lorsque ces mécanismes sont actionnés. Ces mécanismes de verrouillage comportent généralement une partie mâle et une partie femelle montées sur les bords inférieurs respectifs des capots, de façon à pouvoir coopérer entre elles lorsque les capots sont fermés. Un tel mécanisme est connu du document US 6 334 588 B, qui correspond au préambule de la revendication 1.

En vol, plusieurs facteurs engendrent une force centrifuge s'exerçant sur les capots. A titre d'exemples, on peut citer l'écoulement aérodynamique sur les capots, des surpressions éventuelles provoquées par l'éclatement de tuyauteries internes au moteur, ou encore la présence de dispositifs de ventilation.

Par conséquent, les mécanismes de verrouillage du système de fermeture permettent de s'opposer à cette force afin de maintenir les capots solidaires du moteur. Pour des raisons de sécurité, il est généralement prévu un nombre de mécanismes supérieur au nombre de mécanismes nécessaires pour assurer le passage des efforts générés par cette force centrifuge.

Le document US-A-4 531 769 concerne un mécanisme de verrouillage perfectionné prévu pour assurer la fermeture de deux capots entourant un moteur d'avion. Ce mécanisme, du type à genouillère, comprend un crochet principal articulé sur le bord inférieur d'un premier capot, de façon à pouvoir pénétrer dans une ouverture complémentaire liée à l'autre capot. La position du crochet principal est sécurisée par l'utilisation d'un deuxième crochet. Le verrouillage du mécanisme est commandé en appuyant sur une poignée.

Lorsque de tels mécanismes de verrouillage sont implantés sur un moteur d'avion, il peut arriver que l'opérateur chargé de fermer les capots oublie d'effectuer le verrouillage, ou que celui-ci soit mal réalisé. En effet, lorsqu'un mécanisme de verrouillage tel que celui qui est décrit dans le document US-A-4 531 769 est utilisé, il est possible d'actionner la poignée dans le sens de la fermeture alors que le crochet n'est pas engagé dans l'ouverture complémentaire liée à l'autre capot. Dans ce cas, comme dans l'hypothèse où l'opérateur oublierait de manoeuvrer les mécanismes de verrouillage après avoir abaissé les capots, il n'est pratiquement pas possible de voir que le verrouillage a été omis ou imparfaitement exécuté. En effet, en raison de leur masse élevée, les capots se mettent automatiquement en place par gravité et leurs bords inférieurs ne dépassent pratiquement pas de l'entrée d'air. De plus, les mécanismes de verrouillage existants ne possèdent actuellement pas de parties réellement saillantes permettant d'indiquer à l'opérateur un défaut de fermeture.

Dans le document EP-A-0 596 070, ce problème a été résolu en montant sur le bord inférieur de l'un des deux capots un bras pivotant ou coulissant qui pend de manière visible sous le moteur lorsque les deux capots sont abaissés mais non verrouillés. L'indication d'un défaut de fermeture peut encore être améliorée en ajoutant un fanion à l'extrémité du bras pivotant ou coulissant.

Selon ce document EP-A-0 596 070, le verrouillage des capots ne peut être effectué qu'après que l'opérateur ait remonté manuellement le bras afin de le loger sur un réceptacle prévu à cet effet. Lorsque le verrouillage est effectué, une broche liée au capot opposé pénètre dans le bras pour le maintenir dans sa position escamotée. Lorsque les capots sont déverrouillés, un ressort amène automatiquement le bras dans sa position en saillie, visible de l'extérieur.

Cependant, cet indicateur présente un certain nombre d'inconvénients.

En premier lieu, dans le cas le plus fréquent où le moteur est installé sous l'aile de l'avion, le système de fermeture des capots est situé sous le moteur, dans un endroit très proche du sol et donc d'accès malaisé. Lorsque l'opérateur ouvre ou referme les capots, il doit s'accroupir pour manoeuvrer les mécanismes de verrouillage composant le système de fermeture. Le bras ajouté au système de fermeture selon le document EP-A-0 596 070 constitue alors une pièce saillante qui vient s'ajouter à d'autres parties contondantes du moteur risquant de blesser l'opérateur.

Par ailleurs, lorsqu'on referme les capots, l'indicateur décrit dans le document EP-A-0 596 070 impose à l'opérateur de remonter le bras tout en verrouillant les capots. Dans la position dans laquelle il se trouve, cette opération est particulièrement fastidieuse et difficile à réaliser.

En outre, l'indicateur décrit dans le document EP-A-0 596 070 complique sensiblement les systèmes de fermeture existants, puisqu'il nécessite un alignement entre la broche assurant le blocage du bras en position escamotée et le trou formé dans le bras pour recevoir cette broche. Cette opération peut se révéler fastidieuse, compte tenu de l'usure et du jeu que prendront les pièces lors de leur utilisation.

De plus, lorsque l'un des mécanismes de verrouillage a été verrouillé, l'indicateur décrit dans le document EP-A-0 596 070 n'est pas en mesure d'indiquer la présence d'un défaut de fermeture sur les autres mécanismes de verrouillage constituant le système de fermeture.

Cependant, en vol, pour assurer le maintien des capots l'un par rapport, il est habituellement nécessaire de prévoir une pluralité de mécanismes de verrouillage, afin d'éviter l'arrachement des capots du moteur.

Or dans le document présenté ci-dessus, il suffit que l'un quelconque des mécanismes de verrouillage du système de fermeture soit actionné pour interdire à l'indicateur d'avertir d'un défaut de fermeture, sans que l'on se préoccupe de l'état de l'ensemble des autres mécanismes. Ceci est donc particulièrement préjudiciable dans le sens où l'on pourrait aboutir à des situations dans lesquelles le personnel au sol ne serait pas averti d'un verrouillage insuffisant pour assurer le maintien des capots entre eux, par exemple lors d'un vol de l'avion.

Le document EP-A-1 099 629 décrit un indicateur de défaut de fermeture de moyens de verrouillage qui comprend des moyens de butée escamotables aptes à maintenir automatiquement les deux capots écartés l'un de l'autre, lors d'un passage de ces capots d'une position ouverte à une position fermée.

Bien que remédiant aux inconvénients principaux de la réalisation décrite dans le document EP-A-0 596 070, cet indicateur présente néanmoins un inconvénient similaire à un des inconvénients afférents à ce document EP-A-0 596 070.

Cet inconvénient est celui lié à l'incapacité de l'indicateur à avertir lors d'un défaut de fermeture survenant sur l'un quelconque des mécanismes de verrouillage du système de fermeture, lorsque l'un d'entre eux a déjà été verrouillé. En effet, une fois que l'indicateur à été manuellement actionné pour permettre la fermeture des moyens de verrouillage, cet indicateur n'est plus capable de renseigner sur l'état des différents mécanismes de verrouillage.

Par ailleurs, dans les documents EP-A-0 596 070 et EP-A-1 099 629, les indicateurs nécessitent systématiquement une intervention humaine. Cette nécessité, rencontrée à la fois dans la détection de défaut et dans la fermeture des mécanismes de verrouillage, est par conséquent sujette à la négligence des opérateurs.

Pour illustrer les conséquences que peuvent entraîner les interventions humaines, on peut rencontrer des situations dans lesquelles l'opérateur ne verrouille qu'un seul des mécanismes de verrouillage constituant le système de fermeture, parfois même imparfaitement en plaçant le crochet dans l'ouverture complémentaire sans actionner la poignée, afin d'éviter un entrechoquement des capots, par exemple sous l'effet du vent.

Dans un tel cas, dans l'ensemble des réalisations de l'art antérieur, les capots semblent fermés et verrouillés, mais l'unique mécanisme actionné est généralement insuffisant pour assurer un maintien des capots entre eux lors d'un vol de l'avion.

### EXPOSÉ DE L'INVENTION

L'invention a pour but de présenter un système de fermeture pouvant être interposé entre deux capots de nacelle d'un moteur d'avion aptes à occuper, l'un par rapport à l'autre, une position ouverte et une position fermée, ce système de fermeture comprenant au moins un mécanisme de verrouillage principal et remédiant au moins partiellement aux inconvénients cités ci-dessus relatifs aux réalisations de l'art antérieur.

Pour ce faire, l'invention a pour objet un système de fermeture pouvant être interposé entre deux capots de nacelle d'un moteur d'avion aptes à occuper, l'un par rapport à l'autre, une position ouverte et une position fermée, le système comprenant au moins un mécanisme de verrouillage principal. Selon l'invention, le système comprend également au moins un mécanisme de verrouillage de secours automatiquement enclenché lors d'un déplacement des deux capots la position ouverte vers la position fermée, chaque mécanisme de verrouillage de secours étant apte à être sollicité uniquement lorsqu'au moins un mécanisme de verrouillage principal n'est pas verrouillé.

Lorsqu'un opérateur déplace les deux capots de la position ouverte vers la position fermée, chaque mécanisme de verrouillage de secours est enclenché automatiquement, sans que cela nécessite d'intervention humaine supplémentaire. Le ou les mécanismes de verrouillage de secours permettent alors d'assurer une sécurité en cas de non-actionnement de l'un ou de plusieurs mécanismes de verrouillage principaux.

Lorsque l'un des mécanismes de verrouillage principaux est verrouillé, chaque mécanisme de verrouillage de secours est enclenché, mais n'est pas sollicité mécaniquement. Dans ce cas, le ou les mécanismes de verrouillage de secours ne participent pas au maintien des éléments entre eux.

C'est en effet uniquement lorsque le ou les mécanismes de verrouillage principaux sont non-actifs, que le ou les mécanismes de verrouillage de secours se substituent aux mécanismes de verrouillage principaux, pour assurer le maintien des capots entre eux.

Préférentiellement, chaque mécanisme de verrouillage de secours est apte à être sollicité lorsque les deux capots tendent à se déplacer de la position fermée vers la position ouverte.

De plus, chaque mécanisme de verrouillage de secours peut comprendre une première et une seconde parties de formes complémentaires, respectivement montées sur un premier et un second des deux éléments.

Selon un mode de réalisation préféré de l'invention, la première partie est solidaire du premier des deux capots, et la seconde partie est un levier articulé sur le second des deux capots.

En outre, chaque seconde partie est couplée à des moyens mécaniques de rappel aptes à maintenir un enclenchement entre les première et seconde parties.

On peut également prévoir que le système de fermeture comprend une pluralité de mécanismes de verrouillage de secours, ainsi qu'un mécanisme de verrouillage principal disposé à chacune des deux extrémités latérales des éléments.

D'autres caractéristiques et avantages de l'invention apparaîtront dans la description non limitative ci-dessous.

### BRÈVE DESCRIPTION DES DESSINS

La description sera faite au regard des dessins annexés parmi lesquels :
- la figure 1 représente une vue schématique en perspective d'un turboréacteur dont la nacelle est munie d'un système de fermeture selon l'invention, les capots de la nacelle étant en position fermée,
- la figure 2 représente une vue partielle de dessous du turboréacteur de la figure 1,
- la figure 3 représente une vue partielle de la figure 2, à plus grande échelle, montrant un mécanisme de verrouillage principal et un mécanisme de verrouillage de secours,
- la figure 4 représente une vue partielle en coupe prise selon la ligne A-A de la figure 3,
- la figure 5 représente une vue partielle en coupe prise selon la ligne B-B de la figure 3, lorsque les capots de la nacelle se déplacent de la position ouverte vers la position fermée,
- la figure 6 représente une vue partielle en coupe prise selon la ligne B-B de la figure 3, lorsque les mécanismes de verrouillage de secours sont enclenchés mais non sollicités,
- la figure 7 représente une vue partielle en coupe prise selon la ligne B-B de la figure 3, lorsque les mécanismes de verrouillage de secours sont enclenchés et sollicités ; et
- la figure 8 représente une vue schématique en coupe d'une poignée d'un mécanisme de verrouillage principal appartenant à un système de fermeture selon un mode de réalisation préféré de l'invention.

### EXPOSÉ DÉTAILLÉ D'UN MODE DE RÉALISATION PRÉFÉRÉ

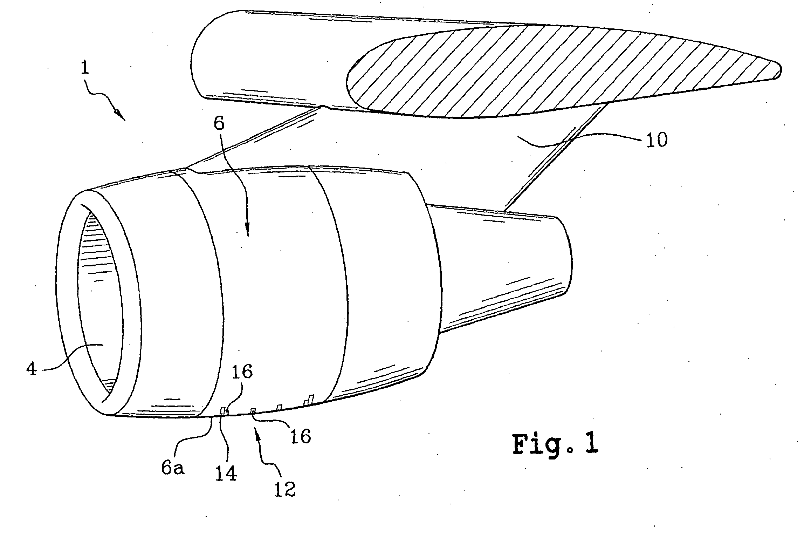

Comme on peut le voir sur la figure 1, une nacelle 1 d'un turboréacteur est habituellement délimitée vers l'intérieur, au droit d'une soufflante (non représentée), par un carter de soufflante 4. De plus, la nacelle 1 est également délimitée vers l'extérieur, par deux capots 6 et 8 constituant respectivement le capot gauche et le capot droit. Chacun des capots gauche 6 et droit 8 présente sensiblement la forme d'un C ou d'un demi-cercle, en section transversale selon un plan perpendiculaire à l'axe longitudinal du moteur.

Les capots 6 et 8 sont chacun articulés sur un mât 10 par lequel le moteur est suspendu, sous une voilure de l'aéronef. Plus précisément, le bord supérieur de chacun des capots 6 et 8 est relié au mât 10, au niveau d'une partie supérieure du moteur, par une charnière (non représentée) dont l'axe est sensiblement parallèle à l'axe longitudinal du moteur. Cet agencement particulier permet de relever chacun des capots 6 et 8 afin d'accéder à différents équipements (non représentés) du moteur, traditionnellement implantés dans un espace annulaire (non représenté) délimité à l'intérieur de la nacelle 1 entre le carter de soufflante 4, et les capots gauche 6 et droit 8.

Les capots gauche 6 et droit 8 sont habituellement verrouillés et maintenus l'un par rapport à l'autre par l'intermédiaire d'un système de fermeture 12, comprenant une pluralité de mécanismes de verrouillage 14,16, représentés schématiquement sur la figure 1.

Parmi les mécanismes de verrouillage 14,16 positionnés entre les deux capots 6 et 8 et constituant le système de fermeture 12, on note des mécanismes de verrouillage principaux 14, prévus en quantité suffisante pour pouvoir assurer le maintien des capots 6,8 entre eux en cours de vol.

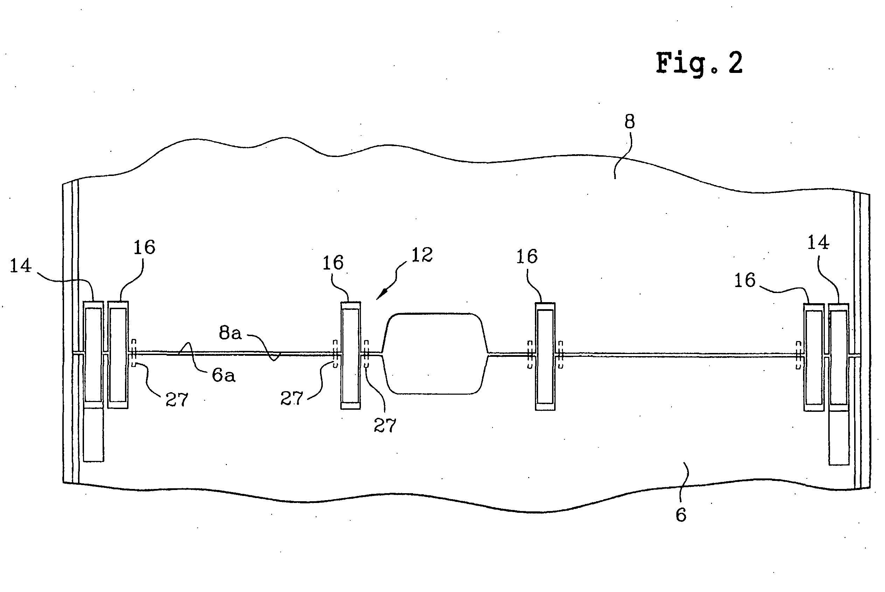

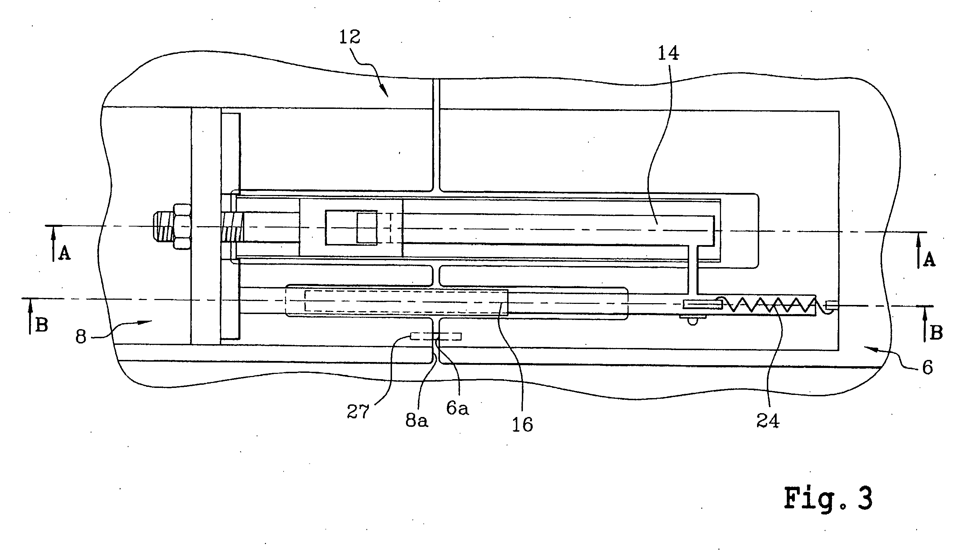

Selon un mode de réalisation préféré de l'invention et en référence aux figures 2 et 3, on voit un système de fermeture 12 pouvant être interposé entre deux capots 6 et 8, les capots gauche 6 et droit 8 de la nacelle 1.

Les capots 6 et 8 disposent chacun d'un bord inférieur 6a,8a, ces bords inférieurs 6a,8a se situant à l'opposé des bords supérieurs reliant les capots gauche 6 et droit 8 au mât 10.

Le système de fermeture 12 comprend deux mécanismes de verrouillage principaux 14, chacun reliant deux à deux les extrémités latérales des capots 6 et 8. Le positionnement préféré pour les mécanismes principaux 14 est justifié par l'accès relativement aisé des extrémités latérales des capots, pour un opérateur voulant verrouiller ou déverrouiller ces mécanismes 14. Le système de fermeture 12 comporte également au moins un mécanisme de verrouillage de secours 16. De préférence et dans le mode de réalisation préféré décrit, le système 12 comprend quatre mécanismes de verrouillage de secours 16, ces derniers étant situés parallèlement les uns par rapport aux autres, entre les deux mécanismes de verrouillage principaux 14, selon une direction sensiblement orthogonale à l'axe longitudinal du moteur. Il est précisé que le nombre de mécanismes de verrouillage de secours 16 est déterminé de sorte qu'en cas de non-verrouillage de l'un ou de plusieurs mécanismes de verrouillage principaux 14, le maintien des capots 6 et 8 l'un par rapport à l'autre reste assuré.

Les mécanismes de verrouillage principaux 14 sont de préférence des mécanismes à genouillère, ce type de mécanisme étant classiquement utilisé entre les deux capots d'une nacelle d'un moteur.

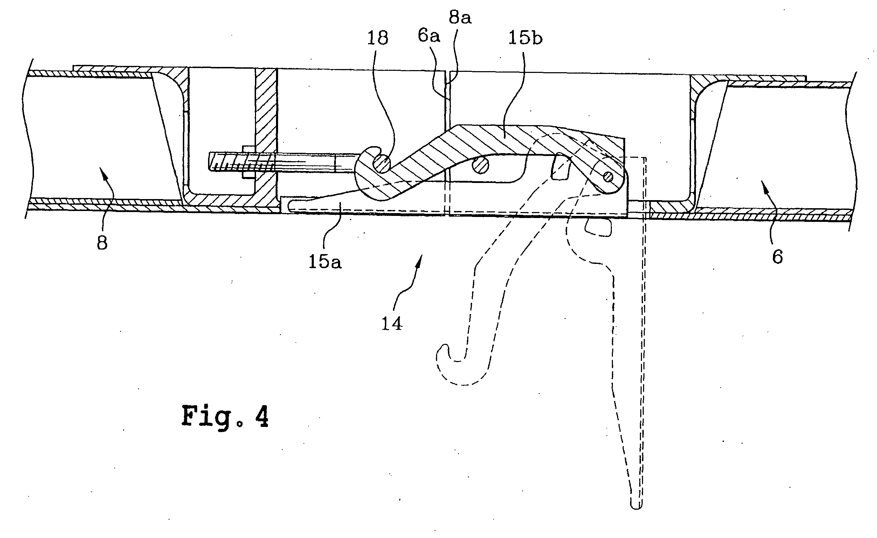

En référence à la figure 4, le mécanisme 14 comprend une poignée 15a articulée sur le capot gauche 6, et portant un crochet articulé 15b. Sur cette même figure, le mécanisme de verrouillage principal 14 est représenté dans sa configuration verrouillée en trait plein, tandis que sa configuration non-actionnée est représentée en pointillés. Lorsque le mécanisme 14 est dans sa position verrouillée, le crochet 15b coopère avec une mortaise 18 située sur le capot droit 8, assurant ainsi le maintien des capots 6 et 8 l'un par rapport à l'autre.

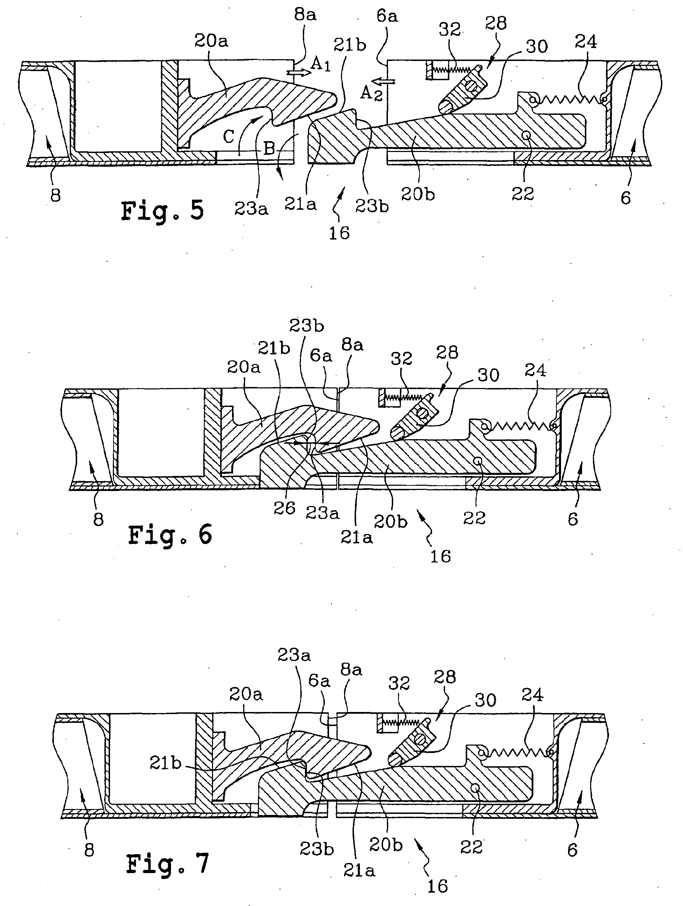

Par ailleurs, comme on peut le voir sur la figure 5, chaque mécanisme de verrouillage de secours 16 comprend une première partie, de préférence un crochet 20a, ainsi qu'une seconde partie, de préférence un levier 20b, ces parties ayant des formes complémentaires. Le crochet 20a et le levier 20b sont respectivement monté de façon solidaire sur le capot droit 8, et monté de façon articulée, par l'intermédiaire d'un axe 22 sensiblement parallèle à l'axe longitudinal du moteur, sur le capot gauche 6.

Le crochet 20a et le levier 20b comprennent respectivement des rampes 21a et 21b du type surfaces inclinées, aptes à commander le pivotement du levier articulé 20b vers l'extérieur lors d'un rapprochement des capots 6 et 8. De plus, le crochet 20a et le levier 20b comprennent également respectivement des surfaces d'accrochage 23a et 23b, parallèles aux bords inférieurs 6a,8a des capots 6 et 8, et aptes à venir se placer en vis-à-vis l'une de l'autre lors de la fermeture des capots 6,8.

En outre, le levier articulé 20b est relié à des moyens mécaniques de rappel, de préférence constitués d'un ressort 24, le ressort 24 étant également relié au capot gauche 6.

Notons à titre d'exemple que la première partie pourrait également être constituée d'un levier articulé sur le capot droit 8, ou encore d'une mortaise avec laquelle le levier 20b serait susceptible de coopérer.

Comme représenté sur les figures 2 et 3, un ou plusieurs pions de guidage 27 peuvent être situés à proximité de chaque mécanisme de verrouillage de secours 16, facilitant ainsi l'enclenchement entre le crochet 20a et le levier 20b des mécanismes 16.

Le système de fermeture 12 est apte à fonctionner de la manière suivante.

Lorsque les deux capots 6 et 8 sont dans une position ouverte (position non représentée sur les figures), ils sont écartés l'un de l'autre, permettant ainsi à un opérateur d'effectuer des interventions du type opérations de manutention sur le moteur.

Lorsque les diverses opérations à réaliser sont terminées, les capots 6 et 8 sont rabattus de manière à être fixés l'un à l'autre. Les capots gauche 6 et droit 8 sont alors déplacés de la position ouverte vers une position fermée.

Dans la position fermée, les bords inférieurs 6a et 8a des capots 6 et 8 sont espacés de quelques millimètres seulement, de sorte qu'un opérateur puisse aisément verrouiller les deux mécanismes principaux 14, en manoeuvrant le crochet 15b puis le levier 15a de ces mécanismes 14.

Cependant, il peut arriver que les capots 6 et 8 soient rabattus dans la position fermée, sans que les deux mécanismes principaux 14 soient verrouillés. En effet, l'opérateur peut oublier de verrouiller l'un ou la totalité des mécanismes principaux 14 appartenant au système de fermeture 12. Cet oubli peut notamment provenir d'une situation dans laquelle l'opérateur, ayant préalablement verrouillé l'un des mécanismes principaux 14 pour éviter un entrechoquement des capots 6 et 8 sous l'effet du vent, omet de verrouiller l'autre mécanisme principal 14 du système de fermeture 12.

Dans une telle situation, aucun élément matériel ne permet d'avertir le personnel au sol d'un défaut de fermeture de l'un des mécanismes principaux 14 concernés. En effet, les mécanismes de verrouillage principaux 14 se situant sous le moteur, un défaut d'actionnement de l'un ou de plusieurs de ces mécanismes 14 est par conséquent difficile à déceler, engendrant ainsi une insécurité notable en cas de vol de l'avion.

C'est pour ces raisons que le système de fermeture 12 comprend également des mécanismes de verrouillage de secours 16, ces derniers étant aptes à s'enclencher automatiquement lors d'un déplacement des capots 6,8 de la position ouverte vers la position fermée.

En référence à la figure 5, les flèches A₁ et A₂ symbolisent très schématiquement les directions respectives des capots droit 8 et gauche 6, lorsqu'ils se déplacent, sous l'action d'un opérateur et/ou de leur propre masse, de la position ouverte vers la position fermée.

Avant que les capots 6,8 n'atteignent la position fermée, la rampe 21b du levier articulé 20b entre en contact avec la rampe 21a du crochet 20a. Le levier 20b pivote donc autour de l'axe 22 au fur et à mesure que les capots 6 et 8 se rapprochent l'un de l'autre. Comme cela a été mentionné ci-dessus, les pions de guidage 27 prévus à proximité des mécanismes de verrouillage de secours 16 assurent un bon positionnement du crochet 20a par rapport au levier 20b, de sorte que lors de la fermeture des capots 6,8, les rampes 21a et 21b entrent en contact l'une avec l'autre.

Le pivotement du levier articulé 20b, représenté par la flèche B, entraîne ce levier 20b vers l'extérieur de la nacelle 1. Toutefois, le ressort 24 maintient les rampes 21a et 21b en contact. Lorsque les capots 6 et 8 sont dans une position suffisamment proche de la position fermée pour que le levier 20b et le crochet 20a perdent le contact et soient enclenchés, le levier articulé 20b pivote à nouveau autour de l'axe 22, dans un sens inversé schématisé par la flèche C, sous l'effet du ressort 24 qui se rétracte et retrouve sa forme initiale.

La figure 6 représente le mécanisme de verrouillage de secours 16 dans une configuration enclenchée, lorsque les capots 6 et 8 sont dans la position fermée. Le crochet 20a et le levier articulé 20b ne sont plus en contact l'un de l'autre. On peut notamment voir sur cette figure que lorsque les mécanismes de verrouillage principaux 14 sont actionnés, et que par conséquent ils maintiennent les capots 6 et 8 dans la position fermée, il existe un jeu 26 entre les surfaces d'accrochage 23a et 23b du crochet 20a et du levier articulé 20b. Le jeu 26, se situant dans une direction sensiblement circonférentielle par rapport à l'axe longitudinal du moteur, indique que le mécanisme de verrouillage de secours 16, bien qu'étant enclenché, n'est pas sollicité mécaniquement. L'intégralité de la reprise des efforts pour maintenir les capots 6 et 8 entre eux est donc normalement assurée par les mécanismes de verrouillage principaux 14, lorsque ceux-ci sont verrouillés.

En revanche, lorsqu'on assiste à un défaut de verrouillage de l'un ou de plusieurs mécanismes principaux 14, des conditions particulières notamment rencontrées en situation de vol, engendrent une force centrifuge qui entraîne un déplacement des capots 6 et 8 de la position fermée vers la position ouverte. Dans ce cas, le jeu 26 existant entre le crochet 20a et le levier 20b diminue à la mesure que les capots 6,8 s'écartent l'un de l'autre sous l'effet de la force centrifuge, jusqu'à une position (représentée sur la figure 7) dans laquelle les surfaces d'accrochage 23a,23b du crochet 20a et du levier 20b entrent en contact de manière à stopper le mouvement relatif des capots droit 8 et gauche 6.

Ainsi, lorsque le ou les mécanismes principaux 14 ne sont pas verrouillés, les mécanismes de verrouillage de secours 16 sont aptes à se substituer à ces mécanismes principaux 14, pour assurer le maintien des capots 6 et 8 entre eux. Il est également à préciser que les mécanismes de verrouillage de secours 16 peuvent aussi être utiles lors d'une défaillance des mécanismes principaux 14, cette défaillance pouvant par exemple survenir durant un vol de l'avion. Cet agencement est d'autant plus avantageux qu'il n'est plus nécessaire d'avoir un nombre surdimensionné de mécanismes principaux 14 constituant le système de fermeture 12, car en cas de défaillance de ces mécanismes 14, les mécanismes de verrouillage de secours 16 sont prévus en nombre suffisant pour reprendre la force centrifuge exercée en cours de vol, et maintenir les capots 6 et 8 entre eux. De cette façon, on est alors en mesure de réduire considérablement le nombre de mécanismes principaux 14 constituant le système de fermeture 12.

De plus, lorsque les mécanismes de secours 16 sont sollicités, les pions de centrage 27 situés à proximité de ces mécanismes 16 peuvent également être utilisés pour reprendre des efforts s'appliquant selon une direction perpendiculaire à l'axe longitudinal du moteur.

Notons que l'opération consistant à déplacer les capots 6 et 8 d'une position fermée vers une position ouverte s'effectue en déverrouillant, lorsqu'ils ont été préalablement verrouillés, les mécanismes principaux 14, et en actionnant également des moyens de désenclenchement 28 couplés à chacun des mécanismes de verrouillage de secours 16.

Lorsqu'ils sont actionnés, les moyens de désenclenchement 28 permettent de faire pivoter le levier articulé 20b afin de le dégager du crochet 20a, libérant ainsi les deux capots 6,8 l'un de l'autre. Ils peuvent notamment comprendre un bras articulé 30 commandé par un organe de manoeuvre (non représenté) et rappelé par un ressort 32.

Pour déplacer les capots 6 et 8 d'une position fermée vers une position ouverte, on peut prévoir que la poignée 15a d'un mécanisme de verrouillage 14 est à la fois en mesure de piloter l'ouverture et la fermeture de ce mécanisme 14, mais également en mesure d'actionner les moyens de désenclenchement 28 de l'un ou de plusieurs mécanismes de verrouillage de secours 16.

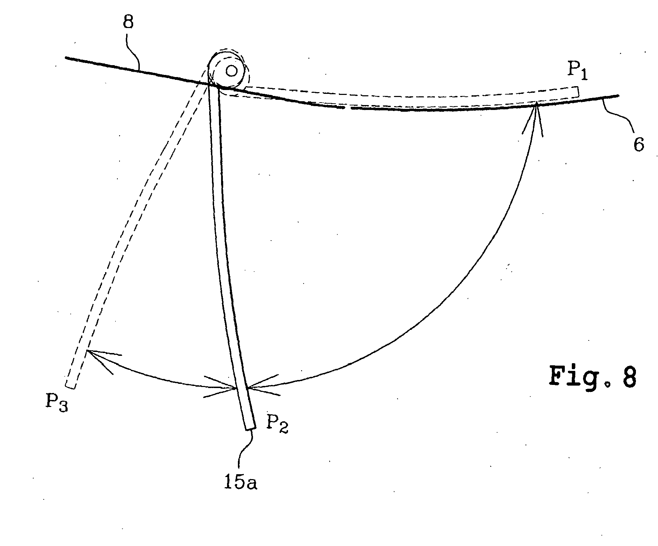

Dans un tel cas, comme l'illustre très schématiquement la figure 8, la poignée 15a d'un mécanisme principal 14 peut alors occuper trois positions distinctes, respectivement référencées par P₁, P₂ et P₃.

Dans la position P₁, la poignée 15a est rabattue contre le capot gauche 6, indiquant que les deux capots 6 et 8 sont fermés et verrouillés.

Lorsque l'on déplace la poignée 15a de la position P₁ vers la position P₂, le mouvement de cette poignée 15a entraîne le déverrouillage du mécanisme principal 14. Cependant, les capots 6 et 8 sont toujours fermés, notamment en raison de la présence des mécanismes de verrouillage de secours 16. La poignée 15a du mécanisme principal 14 repose alors dans une position stable P₂.

Pour déplacer la poignée 15a depuis la position P₂ stable vers la position P₃ instable, l'opérateur doit volontairement exercer une force sur cette poignée 15a. En cas de relâchement de la pression exercée sur la poignée 15a, cette dernière est susceptible de revenir automatiquement dans sa position P₂, grâce, par exemple, à un ressort de rappel (non représenté). Il est précisé qu'un système mécanique (non représenté) du type système de tringlerie est relié d'une part à la poignée 15a, et d'autre part à l'axe du bras articulé 30 des moyens de désenclenchement 28 d'au moins un mécanisme de verrouillage de secours 16.

Ainsi, lors du mouvement de la poignée 15a de la position P₂ vers la position P₃, le système mécanique du type système de tringlerie provoque l'actionnement du (des) bras articulé(s) 30 relié(s) à la poignée 15a, ceci entraînant l'actionnement des moyens de désenclenchement 28 et le pivotement du (des) levier(s) articulé(s) 20b.

De cette manière, lorsque la poignée 15a de chaque mécanisme de verrouillage principal 14 a atteint la position P₃, les leviers articulés 20b et les crochets 20a des mécanismes de secours 16 sont tous désenclenchés, permettant alors à l'opérateur d'ouvrir les capots 6 et 8.

Bien entendu, l'ensemble des mécanismes de verrouillage de secours 16 doivent être désenclenchés pour permettre l'ouverture des capots 6 et 8. Pour obtenir une telle fonctionnalité, il est alors possible d'adopter plusieurs configurations.

A titre d'exemple, on peut tout d'abord prévoir que chaque mécanisme de verrouillage de secours 16 est relié au mécanisme principal 14 le plus proche. De plus, une autre possibilité réside dans l'établissement d'une liaison unique entre un seul mécanisme de secours 16 et l'un quelconque des mécanismes principaux 14 constituant le système de fermeture 12. Dans ce cas, il est alors nécessaire de prévoir des moyens permettant de solidariser les axes 22 de chaque levier articulé 20b, afin que le pivotement de l'un d'entre eux entraîne le pivotement des leviers articulés 20b de tous les mécanismes de verrouillage de secours 16. Cette dernière solution sera préférée dans la mesure où pour permettre l'ouverture des capots 6 et 8, la poignée 15a d'un seul mécanisme principal 14 doit être maintenue dans la position P₃, les autres poignées 15a pouvant rester dans leur position stable P₂. Le passage des capots 6 et 8 d'une position fermée à une position ouverte nécessite par conséquent qu'un seul opérateur.

Par ailleurs, pour les mécanismes principaux 14, il est possible de prévoir une poignée 15a de taille relativement importante, afin qu'elle constitue un grand bras de levier pour un opérateur effectuant l'ouverture ou la fermeture de ces mécanismes 14.

Le mode de réalisation préféré de l'invention décrit ci-dessus concerne l'application du système de fermeture 12 à une nacelle 1 de moteur.

Bien entendu, diverses modifications selon l'invention qui n'est définie que par les revendications suivantes, peuvent être apportées par l'homme du métier au système de fermeture 12 qui vient d'être décrit, uniquement à titre d'exemple non limitatif.

## Revendications

1. Système de fermeture (12) pouvant être interposé entre deux capots de nacelle (6,8) d'un moteur d'avion aptes à occuper, l'un par rapport à l'autre, une position ouverte et une position fermée, ledit système (12) comprenant au moins un mécanisme de verrouillage principal (14), **caractérisé en ce que** le système (12) comprend également au moins un mécanisme de verrouillage de secours (16) automatiquement enclenché lors d'un déplacement des deux capots (6,8) de la position ouverte vers la position fermée, chaque mécanisme de verrouillage de secours (16) étant apte à être sollicité uniquement lorsqu'au moins un mécanisme de verrouillage principal (14) n'est pas verrouillé.

2. Système de fermeture (12) selon la revendication 1, **caractérisé en ce que** chaque mécanisme de verrouillage de secours (16) est apte à être sollicité lorsque les deux capots (6,8) tendent à se déplacer de la position fermée vers la position ouverte.

3. Système de fermeture (12) selon la revendication 1 ou la revendication 2, **caractérisé en ce que** chaque mécanisme de verrouillage de secours (16) comprend une première (20a) et une seconde parties (20b) de formes complémentaires, respectivement montées sur un premier (8) et un second (6) desdits deux capots (6,8).

4. Système de fermeture (12) selon la revendication 3, **caractérisé en ce que** la première partie (20a) est un crochet solidaire du premier (8) desdits deux capots (6,8), et **en ce que** la seconde partie (20b) est un levier articulé sur le second (6) desdits deux capots (6,8).

5. Système de fermeture (12) selon la revendication 4, **caractérisé en ce que** chaque levier articulé est couplé à des moyens mécaniques de rappel (24) aptes à maintenir un enclenchement entre le crochet et le levier articulé.

6. Système de fermeture (12) selon l'une quelconque des revendications précédentes, **caractérisé en ce que** chaque mécanisme de verrouillage de secours (16) est couplé à des moyens de désenclenchement (28).

7. Système de fermeture (12) selon l'une quelconque des revendications précédentes, **caractérisé en ce que** chaque mécanisme de verrouillage principal (14) est un mécanisme à genouillère.

8. Système de fermeture (12) selon l'une quelconque des revendications précédentes, **caractérisé en ce que** le système (12) comprend une pluralité de mécanismes de verrouillage de secours (16), ainsi qu'un mécanisme de verrouillage principal (14) disposé à chacune des deux extrémités latérales des capots (6,8).

9. Système de fermeture (12) selon l'une quelconque des revendications précédentes, **caractérisé en ce qu'**au moins un pion de guidage (27) se situe à proximité de chaque mécanisme de verrouillage de secours (16).

10. Système de fermeture (12) selon l'une quelconque des revendications précédentes, **caractérisé en ce qu'**au moins un mécanisme de verrouillage principal (14) comprend une poignée (15a) apte à désenclencher au moins un mécanisme de verrouillage de secours (16).

11. Nacelle (1) pour moteur d'avion comprenant deux capots (6, 8) ainsi qu'un système de fermeture (12) interposé entre ces deux capots (6, 8), **caractérisé en ce que** ledit système de fermeture (12) est un système de fermeture selon l'une quelconque des revendications précédentes.

## Patentansprüche

1. Verschlusssystem (12), das zwischen zwei Triebwerksverkleidungshauben (6,8) eines Flugzeugtriebwerks eingefügt werden kann, welche in bezug aufeinander eine offene und eine geschlossene Position einnehmen können, wobei das System (12) mindestens einen Hauptverriegelungsmechanismus (14) umfaßt, **dadurch gekennzeichnet, dass** das System (12) auch mindestens einen Hilfsverriegelungsmechanismus (16) umfaßt, der bei einer Bewegung der beiden Hauben (6,8) automatisch von der offenen Position in die geschlossene Position einrastet, wobei jeder Hilfsverriegelungsmechanismus (16) lediglich dann ausgelöst werden kann, wenn mindestens ein Hauptverriegelungsmechanismus (14) nicht verriegelt ist bzw. wird.

2. Verschlusssystem (12) nach Anspruch 1, **dadurch gekennzeichnet, dass** jeder Hilfsverriegelungsmechanismus (16) ausgelöst werden kann, wenn die beiden Hauben (6,8) dazu tendieren, sich von der geschlossenen Position zu der offenen Position hin zu bewegen.

3. Verschlusssystem (12) nach Anspruch 1 oder 2, **dadurch gekennzeichnet, dass** jeder Hilfsverriegelungsmechanismus (16) einen ersten (20a) und einen zweiten Teil (20b) komplementärer Formen aufweist, die jeweils an einer ersten (8) und einer zweiten (6) der beiden Hauben (6,8) angebracht sind.

4. Verschlusssystem (12) nach Anspruch 3, **dadurch gekennzeichnet, dass** der erste Teil (20a) ein mit der ersten (8) der beiden Hauben (6,8) einstückiger Haken ist, und dass der zweite Teil (20b) ein mit der zweiten (6) der beiden Hauben (6,8) gelenkig verbundener Hebel ist.

5. Verschlusssystem (12) nach Anspruch 4, **dadurch gekennzeichnet, dass** jeder gelenkig verbundene Hebel mit mechanischen Rückholmitteln (24) gekoppelt ist, die einen Rasteingriff zwischen dem Haken und dem angelenkten Hebel halten können.

6. Verschlusssystem (12) nach einem der vorangehenden Ansprüche, **dadurch gekennzeichnet, dass** jeder Hilfsverriegelungsmechanismus (16) mit Entriegelungsmitteln (28) gekoppelt ist.

7. Verschlusssystem (12) nach einem der vorangehenden Ansprüche, **dadurch gekennzeichnet, dass** jeder Hauptverriegelungsmechanismus (14) ein Kniehebelmechanismus ist.

8. Verschlusssystem (12) nach einem der vorangehenden Ansprüche, **dadurch gekennzeichnet, dass** das System (12) mehrere Hilfsverriegelungsmechanismen (16) sowie einen an jedem der beiden lateralen Enden der Hauben (6,8) angeordneten Hauptverriegelungsmechanismus (14) umfaßt.

9. Verschlusssystem (12) nach einem der vorangehenden Ansprüche, **dadurch gekennzeichnet, dass** mindestens ein Führungszapfen (27) sich in Nähe jedes Hilfsverriegelungsmechanismus (16) befindet.

10. Verschlusssystem (12) nach einem der vorangehenden Ansprüche, **dadurch gekennzeichnet, dass** ein Hauptverriegelungsmechanismus (14) einen Handgriff (15a) umfaßt, der mindestens einen Hilfsverriegelungsmechanismus (16) außer Eingriff bringen kann.

11. Triebwerkverkleidung (1) für ein Flugzeugtriebwerk mit zwei Hauben (6,8) sowie einem Verschlusssystem (12), das zwischen diese beiden Hauben (6,8) eingefügt ist, **dadurch gekennzeichnet, dass** das Verschlusssystem (12) ein Verschlusssystem nach einem der vorangehenden Ansprüche ist.

## Claims

1. Closing system (12) which can be interposed between two aircraft engine pod cowls (6, 8) which can occupy an open position and a closed position with respect to each other, said system (12) comprising at least one main locking mechanism (14), **characterized in that** the system (12) also comprises at least one emergency locking mechanism (16) that is automatically engaged when the two cowls (6, 8) are moved from the open position to the closed position, each emergency locking mechanism (16) being able to be activated only when at least one main locking mechanism (14) is not locked.

2. Closing system (12) according to claim 1, **characterized in that** each emergency locking mechanism (16) may be activated when the two cowls (6, 8) start to move from the closed position towards the open position.

3. Closed system (12) according to claim 1 or claim 2, **characterized in that** each emergency locking mechanism (16) includes a first (20a) and a second (20b) complementary shaped parts, installed on a first (6) and a second (8) of the said two cowls (6, 8) respectively.

4. Closing system (12) according to claim 3, **characterized in that** the first part (20a) is a hook fixed to the first (8) of the said two cowls (6, 8), and the second part (20b) is a lever hinged on the second (6) of said two cowls (6, 8).

5. Closing system (12) according to claim 4, **characterized in that** each hinged lever is coupled to mechanical return means (24) that can keep the hook and the hinged lever engaged to each other.

6. Closing system (12) according to any one of the previous claims, **characterized in that** each emergency locking mechanism (16) is coupled to disengagement means (28).

7. Closing system (12) according to any one of the previous claims, **characterized in that** each main locking mechanism (14) is a quick fastening mechanism.

8. Closing system (12) according to any one of the previous claims, **characterized in that** the system (12) comprises several emergency locking mechanisms (16) and a main locking mechanism (14) located at each of the two lateral ends of the cowls (6, 8).

9. Closing system (12) according to any one of the previous claims,
**characterized in that** at least one guide pin (27) is located close to each emergency locking mechanism (16).

10. Closing system (12) according to any one of the previous claims, **characterized in that** at least one main locking mechanism (14) comprises a handle (15a) that can disengage at least one emergency locking mechanism (16).

11. Pod (1) for aircraft engine comprising two cowls (6, 8) as well as a closing system (12) interposed between said two cowls (6, 8), **characterized in that** said closing system (12) is a closing system according to any one of the preceding claims.
